Europäisches Patentamt

European Patent Office

Office européen des brevets

(11) Publication number: **0 343 490**
**A2**

(12) **EUROPEAN PATENT APPLICATION**

(21) Application number: **89108828.8**

(22) Date of filing: **17.05.89**

(51) Int. Cl.⁴: **C08F 220/04**

(30) Priority: **26.05.88 JP 129695/88**

(43) Date of publication of application:
**29.11.89 Bulletin 89/48**

(84) Designated Contracting States:
**BE CH DE FR GB IT LI NL**

(71) Applicant: **SEITETSU KAGAKU CO., LTD.**
**346-1, Miyanishi Harimacho, Kako-gun**
**Hyogo-ken 673-01(JP)**

(72) Inventor: **Obayashi, Shigeji c/o Seitetsu**
**Kagaku, Res.Lab.**
**346-1, Miyanishi Harima-cho**
**Kako-gun Hyogo-ken(JP)**
Inventor: **Nakamura, Morio c/o Seitetsu**
**Kagaku Co. Ltd.**
**Research laboratory 1, Irifune Shikama-ku**
**Himeji-shi Hyogo-ken(JP)**
Inventor: **Fujikake, Masato c/o Seitetsu**
**Kagaku Co. Ltd.**
**Research laboratory 1, Irifune Shikama-ku**
**Himeji-shi Hyogo-ken(JP)**
Inventor: **Kobayashi, Shinji c/o Seitetsu**
**Kagaku Co. Ltd.**
**Research laboratory 1, Irifune Shikama-ku**
**Himeji-shi Hyogo-ken(JP)**
Inventor: **Hamamoto, Shigeki c/o Seitetsu**
**Kagaku Co. Ltd.**
**Research laboratory 1, Irifune Shikama-ku**
**Himeji-shi Hyogo-ken(JP)**
Inventor: **Imai, Takahiro c/o Seitetsu Kagaku**
**Co. Ltd.**
**Research laboratory 1, Irifune Shikama-ku**
**Himeji-shi Hyogo-ken(JP)**

(74) Representative: **Casalonga, Axel et al**
**BUREAU D.A. CASALONGA - JOSSE**
**Morassistrasse 8**
**D-8000 Munich 5(DE)**

(54) Process for producing crosslinked carboxyl group containing polymer.

(57) A process for producing a crosslinked carboxyl group containing polymer which comprises polymerizing an $\alpha,\beta$- unsaturated carboxylic acid with a crosslinking agent which is polymerizable with the carboxylic acid in an inert mixed solvent in which the monomer can be dissolved but the resulting polymerized product can not be dissolved, i.e., a mixed solvent composed of 70 to 99% by volume of a non-polar aliphatic or alicyclic hydrocarbon and 30 to 1% by volume of a polar ester or ketone in the presence of a radical polymerization catalyst.

# PROCESS FOR PRODUCING CROSSLINKED CARBOXYL GROUP CONTAINING POLYMER

## FIELD OF THE INVENTION

The present invention relates to a process for producing a powdery crosslinked carboxyl group containing polymer which is suitable for using as a thickening agent of various kinds of aqueous solutions. Such a crosslinked polymer is characterized in that, when it is dissolved in water and neutralized by a suitable base, it shows extremely high viscosity even in a low concentration and forms a plastic fluid having a high yield value. Thus, it has been used in various industrial fields by utilizing such specific flow properties. For example, it is used as a solid suspension stabilizer of plaster, cement and the like, a thickening agent of a water-soluble coating and an emulsion coating and a sizing agent for printing in textile industry as well as it is used in cosmetics and toiletry fields for thickening and suspension stabilization of various goods such as cream, lotion, shampoo, toothpaste and the like and in medical fields such as ointment, tablet and the like.

Among these, particularly, the crosslinked polymer is noted in cosmetics and toiletry fields. In this respect, since it directly contacts with the human body when using cosmetics or toiletry goods, it is requested to establish a process for producing the crosslinked polymer having high safety at a low cost without deteriorating the above high viscosity and specific flow properties.

## BACKGROUND OF THE INVENTION

As a process for producing the crosslinked carboxyl group containing polymer, there have been known a process comprising copolymerizing an $\alpha,\beta$- unsaturated carboxylic acid such as acrylic acid or the like and a monomer having two or more ethylenic unsaturated groups, for example, polyallyl ether of sucrose (U.S. Patent No. 2,923,692), hexa-allyl trimethylenetrisulfone (U.S. Patent No. 2,958,679), triallyl phosphate (U.S. Patent No. 3,426,004) or the like and, a process comprising copolymerizing an $\alpha,\beta$-unsaturated carboxylic acid such as acrylic acid or the like and a polymerizable monomer having glycidyl group such as glycidyl methacrylate (Japanese Patent Kokai No. 58-84819) and then subjecting the resultant to a heat treatment.

In these processes, in order to obtain the crosslinked polymer in a powdery state advantageously from the industrial viewpoint, an inert solvent in which the monomer can be dissolved but the resulting polymer can not be dissolved is used. Examples of the solvent which has been proposed and used in the prior art include benzene, chlorobenzene, dichloroethane, aliphatic hydrocarbons such as n-hexane, n-heptane and the like, and alicyclic hydrocarbons such as cyclohexane and the like.

However, in the case of using benzene, chlorobenzene or dichloroethane, there are apprehensions for toxicity of the solvent slightly remained in the crosslinked polymer.

On the other hand, when the crosslinked polymer is produced by using a single solvent system of a solvent having good safety such as the above aliphatic or alicyclic hydrocarbon according to the known process, the resulting polymer has low viscosity or inferior flow properties and, therefore, the properties as a thickening agent are extremely deteriorated.

Under these circumstances, the present inventors have studied intensively to establish a process for stably producing the crosslinked carboxyl group containing polymer which has high viscosity and excellent flow properties together with good safety at a low cost. As the results, it has been found that the above crosslinked polymer having excellent properties and good safety can be easily produced by using a solvent system wherein two or more solvents of good safety are mixed in a certain ratio.

## OBJECTS OF THE INVENTION

The main object of the present invention is to provide a process for producing a powdery crosslinked carboxyl group containing polymer having excellent properties and good safety which is suitable for using as a thickening agent for various kinds of aqueous solutions

This object as well as other objects and advantages of the present invention will become apparent to

EP 0 343 490 A2

those skilled in the art from the following description.

## SUMMARY OF THE INVENTION

According to the present invention, there is provided a process for producing a crosslinked carboxyl group containing polymer which comprises polymerizing an $\alpha,\beta$- unsaturated carboxylic acid with a crosslinking agent which is polymerizable with the carboxylic acid in an inert mixed solvent in which the monomer can be dissolved but the resulting polymerized product can not be dissolved, i.e., a mixed solvent composed of 70 to 99% by volume of a non-polar aliphatic or alicyclic hydrocarbon and 30 to 1% by volume of a polar ester or ketone in the presence of a radical polymerization catalyst.

## DETAILED DESCRIPTION OF THE INVENTION

Examples of the non-polar aliphatic hydrocarbon which can be used in the present invention include n-pentane, n-hexane, isohexane, n-heptane, n-octane, isooctane and the like, and examples of the non-polar alicyclic hydrocarbon include cyclopentane, methylcyclopentane, cyclohexane, methylcyclohexane and the like. Among these non-polar solvents, particularly, n-hexane, n-heptane and cyclohexane are stable in quality and easily available and, therefore, they can be advantageously used.

Further, as the polar ester, there can be used, for example, methyl formate, ethyl formate, propyl formate, n-butyl formate, isobutyl formate, amyl formate, isoamyl formate, methyl acetate, ethyl acetate, n-propyl acetate, isopropyl acetate, n-butyl acetate, isobutyl acetate, secbutyl acetate, n-amyl acetate, isoamyl acetate, methyl propionate, ethyl propionate, n-butyl propionate, isoamyl propionate, methyl butyrate, ethyl butyrate, n-butyl butyrate, isoamyl butyrate and the like.

As the polar ketone, there can be used, for example, methyl ethyl ketone, methyl n-propyl ketone, methyl n-butyl ketone, methyl isobutyl ketone, diethyl ketone, ethyl n-butyl ketone, di-n-propyl ketone, diisobutyl ketone, cyclohexanone and the like. Among these polar solvents, particularly, good results are obtained by using n-butyl formate, ethyl acetate, isobutyl acetate, ethyl butyrate, methyl ethyl ketone, methyl propyl ketone and methyl isobutyl ketone.

Regarding a mixing ratio of the above non-polar and polar solvents, the desired crosslinked carboxyl group containing polymer of the present invention can be obtained by using 70 to 99% by volume of the non-polar solvent and 30 to 1% by volume of the polar solvent. When the mixing ratio of the polar solvent is less than 1% by volume, the effect of addition·of the solvent is hardly expected and, when it exceeds 30% by volume, the molecular weight of the resulting polymer is decreased because of the reason described hereinafter and, therefore, it is not preferred. However, the optimum mixing ratio varies depending upon a particular kind of the $\alpha,\beta$- unsaturated carboxylic acid, the crosslinking agent, the mixed solvent and the like.

As described in the Examples hereinafter, the most desired result can be obtained by carrying out the polymerization in the mixed solvent wherein the non-polar solvent is at least one member selected from a group consisting of n-hexane, n-heptane and cyclohexane, the polar solvent is at least one member selected from a group consisting of n-butyl formate, ethyl acetate, isobutyl acetate, ethyl butyrate, methyl ethyl ketone, methyl propyl ketone and methyl isobutyl ketone, and they are combined in the above mixing ratio.

The effect obtained by using the mixed solvent, that is, the function and mechanism for production of the desired polymer having excellent suspension stabilizing properties which is suitable for using as a thickening agent is not clear. However, it is considered that, in comparison with a non-polar single solvent system, the resulting polymer can exist in a dissolved state for a longer period of time because of a suitable polarity of the mixed solvent, which results in delay of separation of the polymer and increase in the molecular weight of the polymer. However, it is also considered that, when the amount of the polar solvent to be added is too large, chain transfer of polymer propagation radicals to the polar solvent becomes active and, on the contrary, decrease in the molecular weight of the polymer is promoted.

It is surprising that the crosslinked polymer having the higher molecular weight can be obtained by using the mixed solvent wherein the polar solvent is added to the non-polar solvent in an amount within the above range to skillfully control the polarity in comparison with that obtained by using respective solvents alone.

3

By the way, alcohols the representative example of which is ethanol, ethers the representative example of which is diethyl ether and acetone are not suitable for the polar solvent used in the present invention.

As the $\alpha,\beta$- unsaturated carboxylic acid used in the present invention, there are, for example, acrylic acid, methacrylic acid, crotonic acid, maleic acid, itaconic acid, fumaric acid and other olefinic unsaturated carboxylic acids and they can be used alone or in combination thereof.

Among these acids, acrylic acid is particularly preferred because it is cheep and readily available and the polymer having excellent properties can be obtained.

As the radical polymerization catalyst, there can be suitably used $\alpha,\beta$- azobisisobutyronitrile, 2,2'-azobis- 2,4-dimethylvaleronitrile, dimethyl-2,2'-azobisisobutyrate, benzoyl peroxide, lauroyl peroxide, cumene hydroperoxide, t-butyl hydroperoxide and the like. Although the amount of these radical polymerization catalysts to be used varies depending upon a kind thereof and working temperature, it is suitable that the amount is normally 0.1 to 10% by weight, preferably, 0.3 to 3% by weight based on the total amount of the $\alpha,\beta$- unsaturated carboxylic acid and the crosslinked agent. When an excess amount of the catalyst is used, it is difficult to dissipate heat because the polymerization reaction proceeds very rapidly and, therefore, it is difficult to maintain the desired reaction temperature. When the amount is too small, it is not economic because the reaction rate becomes too slow.

As the crosslinking agent, there can be used any monomer having two or more ethylenic unsaturated groups or any monomer having one or more epoxy groups and ethylenic unsaturated groups, respectively, in so far as it is dissolved in the above mixed solvent.

Examples of these crosslinking agents include acrylic esters, methacrylic acid esters and allyl ethers which are substituted with two or more polyols. The polyols include ethylene glycol, propylene glycol, polyoxyethylene glycol, polyoxypropylene glycol, glycerin, polyglycerin, trimethylolpropane, pentaerythritol, sucrose, sorbitol and the like. Further, the crosslinking agent includes diallyl phthalate, triallyl phosphate, allyl methacrylate, tetraallyloxyethane, triallyl cyanurate, divinyl adipate, vinyl crotonate, 1,5-hexadiene, divinylbenzene, glycidyl methacrylate, allylglycidyl ether and the like. Among them, more preferred results can be obtained by using pentaerythritoltetraallyl ether, polyallyl sucrose, triallyl phosphate or tetraallyloxyethane.

Usually, the crosslinked polymer of the present invention can be produced according to the following process.

The $\alpha,\beta$- unsaturated carboxylic acid, the crosslinking agent, the polymerization catalyst and the solvent are charged in a reaction vessel equipped with a stirrer, a thermometer, a nitrogen blowing tube and a condenser. The charge amount of the raw materials to be polymerized is suitably not more than 20% by weight, preferably, 5 to 15% by weight based on the total charge amount. When the amount of the raw materials is more than 20% by weight, marked separation of the polymer is caused with the progress of the polymerization reaction. And, at the same time, it becomes difficult to uniformly stir the reaction mixture. When the amount is less than 5% by weight, it is not economic.

Then, in order to remove oxygen in the upper space of the reaction vessel and that dissolved in the raw materials and the solvent, nitrogen gas is bubbled in the solution. The polymerization reaction is initiated by heating the solution to a predetermined temperature in the range of 20 to 120° C, preferably, 30 to 90° C in a warm bath or the like. Thereby, the initial uniform reaction solution gradually changes into a white slurry in the reaction system.

Alternatively, the crosslinking agent can be continuously added to the polymerization reaction system with the progress of polymerization of the $\alpha,\beta$- unsaturated carboxylic acid. After the completion of the polymerization reaction, the precipitate is filtered off and thoroughly washed with a suitable solvent and then dried at a temperature of 50 to 160° C.

Thus, the crosslinked polymer is obtained as white fine powder having a small bulk density. When a large amount of water and the unreacted $\alpha,\beta$- unsaturated carboxylic acid are present- during drying, the resulting polymer sometimes becomes a mass and water-insoluble. Therefore, it is necessary to remove the unreacted monomers completely in the filtration step.

When the crosslinked polymer obtained by the above process is dissolved in a large amount of water and the carboxyl group in the polymer is neutralized to about pH 7 with a suitable base. the resulting solution shows a maximum viscosity. It is sufficient to use the crosslinked polymer thus obtained in a concentration of not more than 1% by weight in water to obtain the desired viscosity and the crosslinked polymer is characterized by such a remarkable thickening effect.

As the neutralizing agent, there can be used any known base including inorganic bases such as sodium hydroxide, potassium hydroxide, sodium carbonate, potassium carbonate, ammonium hydroxide and the like as well as organic bases such as triethanolamine, triethylamine and the like.

The following Examples and Comparative Examples further illustrate the present invention in detail but are not to be construed to limit the scope thereof.

Example 1

Crosslinked polymers of acrylic acid were produced by using the mixed solvent composed of 95% by volume of cyclohexane as a non-polar solvent and 5% by volume of methyl isobutyl ketone as a polar solvent, azobisisobutyronitrile (hereinafter referred to as AIBN) as a radical polymerization catalyst and pentaerythritol tetraallyl ether as a crosslinking agent with varying the amount of the crosslinking agent as follows:

The above mixed solvent was charged to a 500 ml four-necked flask and then the $\alpha,\beta$- unsaturated carboxylic acid, the crosslinking agent and the radical polymerization catalyst in the following amount were charged to carry out the polymerization.

| Ingredients | Amounts |
|---|---|
| Acrylic acid | 30 g |
| Pentaerythritol tetraallyl ether[*1] | 0.4, 0.5 or 0.6 g |
| AIBN | 0.3 g |
| Cyclohexane | 323 ml |
| Methyl isobutyl ketone | 17 ml |

[*1] synthesized according to U.S. Patent No. 3,428,693

The reaction was carried out by maintaining at 60°C for 3 hours with stirring under a nitrogen atmosphere. The resulting polymer was obtained in a white slurry state. After cooling, it was filtered off and thoroughly washed with a mixed solvent of cyclohexane and methyl isobutyl ketone which was the same as that used for the polymerization reaction.

Then, the resulting white cake was dried at about 110°C to obtain 30 g of a crosslinked polymer of acrylic acid as white fine powder. Viscosity of a 0.5% by weight aqueous solution of the crosslinked polymer is shown in Table 1.

Measurement of viscosity

The above crosslinked acrylic acid polymer was suspended in deionized water and neutralized to pH 7.0 with an aqueous sodium hydroxide solution to prepare a 0.5% by weight viscous aqueous solution. Viscosity of the aqueous solution was measured at 25°C by Brookfield rotational viscometer at 20 r.p.m.

Table 1

| Example 1 | Crosslinking agent | Amount (g) | Viscosity (CPS) |
|---|---|---|---|
| (1) | pentaerythritol tetraallyl ether | 0.4 | 51,500 |
| (2) | " | 0.5 | 50,500 |
| (3) | " | 0.6 | 47,500 |

Comparative Examples 1 and 2

According to the same manner as described in Example 1, a crosslinked acrylic acid polymer was produced except that a single solvent was used instead of the mixed solvent as follows:

The polymerization was carried out under the same conditions as described in Example 1 (1) except that 340 ml of cyclohexane alone or 340 ml of methyl isobutyl ketone alone was used as the solvent to obtain a crosslinked polymer as white fine powder. The viscosities of 0.5% by weight aqueous solutions thereof were 32,000 CPS and 1,500 CPS, respectively.

Example 2

According to the same manner as described in Example 1, a crosslinked acrylic acid polymer was produced except that a mixed solvent composed of 95% by volume of n-hexane as a non-polar solvent and 5% by volume of ethyl acetate as a polar solvent, pentaerythritol tetraallyl ether as a crosslinking agent and AIBN as a radical polymerization catalyst in the following amounts were used.

| Ingredients | Amounts |
|---|---|
| Acrylic acid | 30 g |
| Pentaerythritol tetraallyl ether | 0.4 g |
| AIBN | 0.3 g |
| n-Hexane | 323 ml |
| Ethyl acetate | 17 ml |

The resulting polymer was washed with a mixed solvent which was the same as that used for the polymerization and dried to obtain the crosslinked polymer as white fine powder.
The viscosity of the 0.5% by weight aqueous solution was 46,000 CPS.

Comparative Examples 3 and 4

According to the same manner as described in Example 2, a crosslinked acrylic acid polymer was obtained as white fine powder except that 340 ml of n-hexane alone or 340 ml of ethyl acetate alone was used as the solvent.
The viscosities of the 0.5% by weight aqueous solutions thereof were 29,000 CPS and 3,500 CPS, respectively.

Example 3

Crosslinked acrylic acid polymers were produced in the mixed solvent composed of 90% by volume of n-heptane as a non-polar solvent and 10% by volume of ethyl acetate as a polar solvent with varying the kind of crosslinking agents.
The polymerization was carried out under the same conditions as described in Example 1 according to the following formulation.

| Ingredients | Amounts |
|---|---|
| Acrylic acid | 30 g |
| Crosslinking agent (shown in Table 2) | 0.3 g |
| AIBN | 0.3 g |
| n-Heptane | 306 ml |
| Ethyl acetate | 34 ml |

The resulting polymer was washed and dried according to the same manner as described in Example 1 to obtain the crosslinked polymer as white fine powder.
The viscosity of the 0.5% by weight aqueous solution is shown in Table 2.

Table 2

| Example 3 | Crosslinking agent | Viscosity (CPS) |
|---|---|---|
| (1) | tetraallyloxyethane | 52,500 |
| (2) | pentaerythritol tetraallyl ether | 57,500 |
| (3) | triallyl phosphate | 44,200 |

Comparative Example 5

According to the same manner as described in Example 2, a crosslinked acrylic acid polymer was obtained as white fine powder except that 340 ml of n-heptane alone was used instead of the mixed solvent of n-heptane and ethyl acetate.

The viscosity of the 0.5% by weight aqueous solution of the resulting polymer is shown in Table 3.

Table 3

| Comp. Ex. 5 | Crosslinking agent | Viscosity (CPS) |
|---|---|---|
| (1) | tetraallyloxyethane | 32,000 |
| (2) | pentaerythritol tetraallyl ether | 36,000 |
| (3) | triallyl phosphate | 32,500 |

Example 4

According to the same manner as described in Example 1, a crosslinked acrylic acid polymer was produced by using polyallyl sucrose as a crosslinking agent in the mixed solvent composed of 75% by volume of n-heptane and 25% by volume of ethyl acetate.

| Ingredients | Amounts |
|---|---|
| Acrylic acid | 30 g |
| Polyallyl sucrose [*1] | 0.3 g |
| AIBN | 0.3 g |
| n-Heptane | 255 ml |
| Ethyl acetate | 85 ml |

[*1) synthesized according to "INDUSTRIAL AND ENGINEERING CHEMISTRY", Vol. 41, page 1697-1700 (1949)

The resulting polymer was washed and dried according to the same manner as described in Example 1 to obtain the crosslinked polymer as white fine powder.

The viscosity of the 0.5% by weight aqueous solution was 31,000 CPS.

Comparative Examples 6 and 7

According to the same manner as described in Example 4, a white fine powdery crosslinked acrylic acid polymer was obtained except that 340 ml of n-heptane alone or 340 ml of ethyl acetate alone was used instead of the mixed solvent.

The viscosities of the 0.5% by weight aqueous solutions were 2,000 CPS and 15,000 CPS, respectively.

Examples 5 to 7 and Comparative Examples 8 and 9

According to the same manner as described in Example 1, crosslinked acrylic acid polymers were produced by using the mixed solvent of n-heptane and ethyl acetate with varying the volume ratio of both solvents as shown in the following formulation. Further, for comparison, crosslinked acrylic acid polymers were produced by using n-heptane alone and ethyl acetate alone as the solvents. The mixing ratio of the solvent and the viscosity of the 0.5% by weight aqueous solution of the resulting polymer are shown in Table 4.

| Ingredients | Amounts |
|---|---|
| Acrylic acid | 30 g |
| Tetraallyloxyethane | 0.3 g |
| AIBN | 0.3 g |

Table 4

| No. | Non-polar solvent | Mixed solvent Amount (ml) | Polar-solvent | Amount (ml) | Volume ratio (n-heptane/ethyl acetate) | Viscosity (CPS) |
|---|---|---|---|---|---|---|
| Example 5 | n-heptane | 343 | ethyl acetate | 17 | 95/5 | 49,500 |
| Example 6 | " | 306 | " | 34 | 90/10 | 52,500 |
| Example 7 | " | 255 | " | 85 | 75/25 | 45,500 |
| Comp. Example 8 | n-heptane | 340 | - | - | 100/0 | 32,000 |
| Comp. Example 9 | - | - | ethyl acetate | 340 | 0/100 | 9,600 |

Examples 8 to 14

The ratio of a non-polar solvent to a polar solvent of 95% by volume/5% by volume was chosen. And, n-heptane was used as the non-polar solvent and a kind of the polar solvent to be mixed with it was varied.

According to the same manner as described in Example 1, a crosslinked acrylic acid polymer was produced by the following formulation.

The kind of ketones or esters which were used as the polar solvent and the viscosity of the 0.5% by weight aqueous solution of the resulting polymer are shown in Table 5.

| Ingredients | Amounts |
|---|---|
| Acrylic acid | 30 g |
| Pentaerythritol tetraallyl ether | 0.3 g |
| AIBN | 0.3 g |
| n-Heptane | 323 ml |
| Polar solvent | 17 ml |

Table 5

| Example No. | Polar solvent | Viscosity (CPS) |
|---|---|---|
| 8 | methyl ethyl ketone | 51,000 |
| 9 | methyl propyl ketone | 59,000 |
| 10 | methyl isobutyl ketone | 55,000 |
| 11 | n-butyl formate | 62,000 |
| 12 | ethyl acetate | 63,000 |
| 13 | isobutyl butyrate | 57,000 |
| 14 | ethyl butyrate | 61,500 |

Comparative Examples 10 to 16

According to the same manner as described in Examples 8 to 14, a crosslinked acrylic acid polymer was obtained as white fine powder except that 340 ml of the ketone alone or 340 ml of the ester alone was used as the solvent. The viscosity of the 0.5% by weight aqueous solution of the polymer obtained in each Example is shown in Table 6.

Table 6

| Comp. Example No. | Single polar solvent | Viscosity (CPS) |
|---|---|---|
| 10 | methyl ethyl ketone | - [*1] |
| 11 | methyl propyl ketone | - [*1] |
| 12 | methyl isobutyl ketone | 1,500 |
| 13 | ethyl formate | 5,000 |
| 14 | ethyl acetate | 10,000 |
| 15 | isobutyl acetate | 4,500 |
| 16 | ethyl butyrate | 3,000 |

[*1] Measurement of viscosity was impossible because the resulting polymer became a mass during polymerization.

## Claims

1. A process for producing a crosslinked carboxyl group containing polymer which comprises polymerizing an $\alpha,\beta$- unsaturated carboxylic acid with a crosslinking agent which is polymerizable with the carboxylic acid in an inert mixed solvent composed of 70 to 99% by volume of a non-polar solvent and 30 to 1% by volume of a polar solvent in the presence of a radical polymerization catalyst.

2. A process according to claim 1, wherein the non-polar solvent is an aliphatic hydrocarbon.

3. A process according to claim 2, wherein the aliphatic hydrocarbon is at least one member selected from the group consisting of n-hexane and n-heptane.

4. A process according to claim 1, wherein the non-polar solvent is an alicyclic hyrocarbon.

5. A process according to claim 4, wherein the alicyclic hydrocarbon is cyclohexane.

6. A process according to claim 1, wherein the polar solvent is an ester.

7. A process according to claim 6, wherein the ester is at least one member selected from the group consisting of n-butyl formate, ethyl acetate, isobutyl acetate and ethyl butyrate.

8. A process according to claim 1, wherein the polar solvent is a ketone.

9. A process according to claim 8, wherein the ketone is that containing at least four carbon atoms.

10. A process according to claim 9, wherein the ketone is at least one member selected from the group consisting of methyl ethyl ketone, methyl propyl ketone and methyl isobutyl ketone.

11. A process according to claim 1, wherein the $\alpha,\beta$- unsaturated carboxylic acid is acrylic acid.

12. A process according to claim 1, wherein the crosslinking agent is at least one member selected from the group consisting of pentaerythritol tetraallyl ether, tetraallyloxyethane, triallyl phosphate and polyallyl sucrose.